# EUROPEAN PATENT APPLICATION

(11) **EP 2 001 146 A1**
(43) Date of publication of application: **10.12.2008**
(21) Application number: 07739721.4
(22) Date of filing: 27.03.2007
(51) Int. Cl.: H04B 7/26, H04L 12/56

(54) **CENTRAL NODE, BASE STATION, MOBILE STATION, AND DATA TRANSMISSION METHOD**

(30) Priority: 28.03.2006 JP 2006089423
(71) Applicant: NTT DoCoMo, Inc., Chiyoda-ku Tokyo 100-6150 (JP)
(72) Inventor: MOTEGI, Masayuki, Chiyoda-ku, Tokyo 100-6150 (JP); KATO, Yasuhiro, Chiyoda-ku, Tokyo 100-6150 (JP); HAPSARI, Wuri Andarmawanti, Chiyoda-ku, Tokyo 100-6150 (JP); NAKAMURA, Takehiro, Chiyoda-ku, Tokyo 100-6150 (JP)
(74) Representative: HOFFMANN EITLE
(86) International application number: PCT/JP2007/056283
(87) International publication number: WO 2007/116703

(57) **Abstract**

A disclosed base station includes a grouping unit configured to categorize mobile stations that are in the coverage area of the base station and in a multicast group into groups; and a content transmission unit configured to determine radio parameters for content based on at least supported frequency bands or transmission rates of the mobile stations in the respective groups and an available frequency band or a transmission rate of the base station and to transmit the content received from an upper node to the multicast group.

## Description

### TECHNICAL FIELD

The present invention generally relates to data transmission technologies for transmitting multicast data to mobile stations constituting a multicast group in the multimedia broadcast/multicast service (MBMS). More particularly, the present invention relates to a central node, a base station, a mobile station, and a data transmission method in a wireless communication system where different frequency bands are available for mobile stations and base stations.

### BACKGROUND ART

In the multicast mode of MBMS, the following steps are performed: "Subscription", "Service Announcement", "Joining", "Session Start", "MBMS Notification", "Data Transfer", "Session Stop", and "Leaving".

Service Announcement is performed for a relatively long period. A user can join a multicast group at any time during the Service Announcement period. When a user joins a multicast group, an MBMS multicast service activation procedure of the non-access stratum (NAS) is performed.

In this step, the UE sends an activate MBMS context request in the MBMS multicast service activation procedure to NW (via RNC to SGSN and GGSN). The activate MBMS context request includes supportable MBMS bearer capabilities used to define the maximum downlink bit rate.

### DISCLOSURE OF INVENTION

### PROBLEMS TO BE SOLVED BY THE INVENTION

However, the above background art technologies have problems as described below.

In systems employing IMT-2000, the frequency band supported by the systems is fixed at 5 MHz.

A base station (BTS) is normally configured to be able to use up to its supported maximum frequency band for transmission. However, because frequency bands are limited resources, the base station may not always be able to acquire a necessary frequency band. In such a case, the base station can use only the acquired frequency band. For example, if a base station supporting a 20 MHz frequency band has been able to acquire only a 5 MHz frequency band, the capability of the base station is limited to 5 MHz.

Meanwhile, in future mobile communication systems, it may become possible to flexibly change the frequency band supported by a system. If an MBMS service is to be provided in such a system architecture, the frequency band a mobile station (UE) can receive may vary from UE to UE.

Also in future mobile communication systems, in addition to the frequency band, it may become possible to flexibly set the number of multi-input multi-output (MIMO) antennas, the transmission time interval (TTI), and the guard interval (GI) in orthogonal frequency division multiplexing (OFDM). In the IMT-2000 system, these parameters are fixed.

Embodiments of the present invention make it possible to solve or reduce one or more problems caused by the limitations and disadvantages of the background art. One object of the present invention is to provide a central node, a base station, a mobile station, and a data transmission method that make it possible to provide an appropriate multicast service according to the capabilities of mobile stations receiving the multicast service and the capability of a base station providing the multicast service.

### MEANS FOR SOLVING THE PROBLEMS

According to an embodiment of the present invention, a central node includes a content transmission unit configured to, when a request to join a multicast group is received from a mobile station, compare at least supported frequency bands or transmission rates of mobile stations already in the multicast group with a supported frequency band or a transmission rate of the mobile station that has sent the request, to configure a radio parameter based on the comparison result, and to transmit content.

This configuration makes it possible to allow a mobile station to newly join a multicast group even when other mobile stations are already in the multicast group.

According to another embodiment of the present invention, a base station includes a grouping unit configured to categorize mobile stations that are in the coverage area of the base station and in a multicast group into groups; and a content transmission unit configured to determine radio parameters for content based on at least supported frequency bands or transmission rates of the mobile stations in the respective groups and an available frequency band or a transmission rate of the base station and to transmit the content received from an upper node to the multicast group.

This configuration makes it possible to identify frequency bands supported by the mobile stations and a frequency band available for the base station, and to assign multicast data to a frequency band commonly supported by the mobile stations that are to receive the multicast data.

According to another embodiment of the present invention, a mobile station includes a mobile station capability reporting unit configured to generate a request to join a multicast group which request includes information indicating at least a supported frequency band or a transmission rate; and a transmission unit configured to transmit the request.

This configuration makes it possible to generate a request to join a multicast group which request includes information indicating at least a supported frequency band or a transmission rate equivalent to the supported frequency band.

Still another embodiment of the present invention provides a data transmission method including a grouping step of categorizing mobile stations that are in the coverage area of a base station and in a multicast group into groups; a transmission capability determining step of determining radio parameters for a content based on at least supported frequency bands or transmission rates of the mobile stations in the respective groups and an available frequency band or a transmission rate of the base station; and a content transmission step of transmitting the content received from an upper node to the multicast group.

This configuration makes it possible to identify frequency bands supported by the mobile stations and a frequency band available for the base station, and to assign multicast data to a frequency band commonly supported by the mobile stations that are to receive the multicast data.

### ADVANTAGEOUS EFFECT OF THE INVENTION

Embodiments of the present invention provide a central node, a base station, a mobile station, and a data transmission method that make it possible to appropriately provide a multicast service according to the capabilities of mobile stations receiving the multicast service and the capability of a base station providing the multicast service.

### BRIEF DESCRIPTION OF THE DRAWINGS

FIG. 1 is a drawing illustrating a wireless communication system according to an embodiment of the present invention;
FIG. 2 is a block diagram illustrating a mobile station according to an embodiment of the present invention;
FIG. 3 is a block diagram illustrating a base station according to an embodiment of the present invention;
FIG. 4 is a block diagram illustrating an access gateway according to an embodiment of the present invention;
FIG. 5 is a flowchart showing operations of a mobile station according to an embodiment of the present invention;
FIG. 6 is a flowchart showing operations of a base station according to an embodiment of the present invention;
FIG. 7 is a flowchart showing operations of an access gateway according to an embodiment of the present invention;
FIG. 8 is a flowchart showing operations of a base station according to an embodiment of the present invention; and
FIG. 9 is a flowchart showing operations of an access gateway according to an embodiment of the present invention.

### EXPLANATION OF REFERENCES

100 Wireless communication system
200 Core network
300 MBMS delivery server
400 Access gateway (ACGW)
500, 500₁, 500₂ Base station
600, 600₁, 600₂, 600₃, 600₄, 600₅, 600₆ Mobile station

### BEST MODE FOR CARRYING OUT THE INVENTION

The best mode for carrying out the invention is described based on the following embodiments with reference to the accompanying drawings.

Throughout the accompanying drawings, the same reference numbers are used for parts having the same functions, and overlapping descriptions of those parts are omitted.

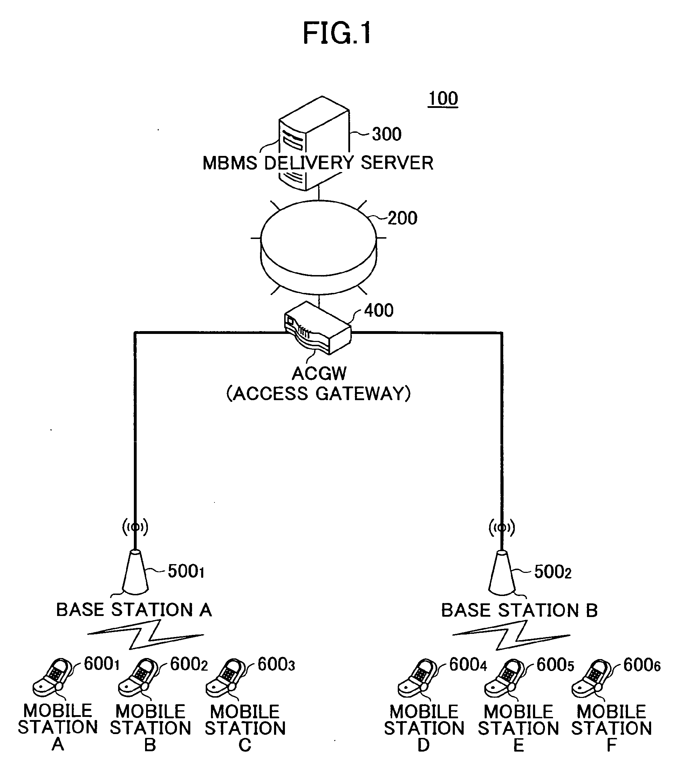

A wireless communication system according to an embodiment of the present invention is described below with reference to FIG. 1.

A wireless communication system 100 of this embodiment includes an MBMS delivery server (BM-SC: broadcast multicast service centre) 300 and an access gateway (ACGW) 400 used as a central node which are connected to a core network 200; base stations 500 including a base station A500₁ and a base station B500₂ connected to the access gateway 400; and mobile stations 600 including a mobile station A600₁, a mobile station B600₂, a mobile station C600₃, a mobile station D600₄, a mobile station E600₅, and a mobile station F600₆. The access gateway 400, for example, includes a mobility management entity (MME)/system architecture evolution (SAE) gateway.

A non-access stratum (NAS) protocol is used between the access gateway 400 and the mobile stations 600.

Meanwhile, access stratum (AS) protocols, such as a radio resource control (RRC) protocol and a media access control (MAC) protocol, are used between the base stations 500 and the mobile stations 600. Also, in addition to the RRC and MAC protocols, a radio link control (RLC) protocol and a packet data convergence protocol (PDCP) are used as AS protocols.

In this embodiment, it is assumed that the same multicast service, such as an MBMS service, is provided by the base station A500₁ and the base station B500₂ to the mobile station A600₁, the mobile station B600₂, the mobile station C600₃, the mobile station D600₄, the mobile station E600₅, and the mobile station F600₆. The access gateway 400 sends common user data via the base stations 500 to the mobile stations 600.

Table 1 shows frequency bands supported by the base stations 500 and the mobile stations 600.

**[Table 1]**

| | 5 MHz | 10 MHz | 15 MHz | 20 MHz |
|---|---|---|---|---|
| Base station A | ○ | | | |
| Base station B | ○ | ○ | ○ | ○ |
| Mobile station A | ○ | ○ | ○ | |
| Mobile station B | ○ | ○ | ○ | |
| Mobile station c | ○ | ○ | | |
| Mobile station D | ○ | ○ | ○ | ○ |
| Mobile station E | ○ | | | |
| Mobile station F | ○ | | | |

The base station A500₁ supports the 5 MHz frequency band and the base station B500₂ supports the 20 MHz frequency band.

The mobile station A600₁ supports the 15 MHz frequency band, the mobile station B600₂ supports the 15 MHz frequency band, the mobile station C600₃ supports the 10 MHz frequency band, the mobile station D600₄ supports the 20 MHz frequency band, the mobile station E600₅ supports the 5 MHz frequency band, and the mobile station F600₆ supports the 5 MHz frequency band.

Each of the mobile stations 600 sends information indicating its capability, for example, its supported frequency bandwidth, via the base station 500 to the access gateway 400. For example, the mobile station includes information indicating its supported frequency bandwidth in a Join request and sends the Join request to the access gateway 400. Alternatively, the mobile station may be configured to include information indicating its transmission rate that is equivalent to the supported frequency bandwidth in a Join request and to send the Join request to the access gateway 400.

In this embodiment, it is assumed that the base station A500₁ can potentially support up to the 20 MHz frequency band, but only the 5 MHz frequency band is allocated to the base station A500₁.

Each of the base stations 500 groups mobile stations that are in its coverage area and in a multicast group (MBMS group).

For example, the base station 500 groups the mobile stations regardless of their capabilities. For example, the base station 500 groups the mobile stations based on their identification information. In this case, for example, the base station 500 categorizes mobile stations into N groups based on the remainder obtained by dividing information indicating each mobile station 600 by the number of groups N (i.e., by the modulo operation of information indicating mobile stations).

Take, for example, a case where the mobile stations A600₁, B600₂, and C600₃ are in the coverage area of the base station A500₁ and in a multicast group for receiving multicast data (MBMS group data). As shown in table 1, the mobile station A600₁ supports the 15 MHz frequency band, the mobile station B600₂ supports the 15 MHz frequency band, and the mobile station C600₃ supports the 10 MHz frequency band. Accordingly, the mobile stations A600₁, B600₂, and C600₃ commonly support the 10 MHz frequency band.

In this case, it is preferable that the base station A500₁ assigns the MBMS data to the 10 MHz frequency band. However, only the 5 MHz frequency band is allocated to the base station A500₁. Therefore, the MBMS data are assigned to the 5 MHz frequency band that is commonly supported by the mobile stations A600₁, B600₂, and C600₃. Thus, if the frequency band available for a base station is narrower than the frequency bands available for mobile stations in a group, the base station transmits content received from an upper node to the multicast group using the frequency band available for itself. Similarly, if the transmission rate of a base station is lower than the transmission rates of mobile stations in a multicast group, the base station may be configured to transmit content received from an upper node to the multicast group using the transmission rate of itself.

Take, for example, another case where the mobile stations D600₄, E600₅, and F600₆ are in the coverage area of the base station B500₂ and in the multicast group for receiving MBMS data. As shown in table 1, the mobile station D600₄ supports the 20 MHz frequency band, the mobile station E600₅ supports the 5 MHz frequency band, and the mobile station F600₆ supports the 5 MHz frequency band. Accordingly, the mobile stations D600₄, E600₅, and F600₆ commonly support the 5 MHz frequency band.

In this case, the base station B500₂ assigns the MBMS data to the 5 MHz frequency band. The base station B500₂ supports up to 20 MHz and therefore can assign the MBMS data to the 5 MHz frequency band.

As another example, the base station 500 may be configured to group mobile stations based on their capabilities, e.g., the frequency bandwidths supported by the mobile stations. Also, the base station 500 may be configured to group mobile stations based on their transmission rates that are equivalent to the supported frequency bandwidths. In the descriptions below, it is assumed that the base station 500 groups mobile stations based on the frequency bandwidths supported by the mobile stations.

Take, for example, a case where the mobile stations A600₁, B600₂, and C600₃ are in the coverage area of the base station A500₁ and in the multicast group. As shown in table 1, the mobile station A600₁ supports the 15 MHz frequency band, the mobile station B600₂ supports the 15 MHz frequency band, and the mobile station C600₃ supports the 10 MHz frequency band.

For example, the base station A500₁ categorizes the mobile stations A600₁ and B600₂ into a multicast group 1 and the mobile station C600₃ into a multicast group 2.

The multicast group 1 can receive up to the 15 MHz frequency band and the multicast group 2 can receive up to the 10 MHz frequency band. However, because the base station A500₁ can use only the 5 MHz frequency band, it assigns the MBMS data to the 5 MHz frequency band regardless of the groups.

Here, the base station A500₁ may be configured to compare the frequency range available for itself and the frequency ranges available for the mobile stations. In this case, if the frequency range available for the base station A500₁ is the narrowest frequency range, the base station A500₁ forms only one group because it is not necessary to form multiple multicast groups.

Take, for example, another case where the mobile stations D600₄, E600₅, and F600₆ are in the coverage area of the base station B500₂ and in the multicast group for receiving MBMS data. As shown in table 1, the mobile station D600₄ supports the 20 MHz frequency band, the mobile station E600₅ supports the 5 MHz frequency band, and the mobile station F600₆ supports the 5 MHz frequency band.

For example, the base station B500₂ categorizes the mobile station D600₄ into a multicast group 3 and the mobile stations E600₅ and F600₆ into a multicast group 4. The multicast group 3 can receive up to the 20 MHz frequency band and the multicast group 4 can receive up to the 5 MHz frequency band.

Therefore, the base station B500₂ assigns the MBMS data for the multicast group 3 to the 20 MHz frequency band and assigns the MBMS data for the multicast group 4 to the 5 MHz frequency band.

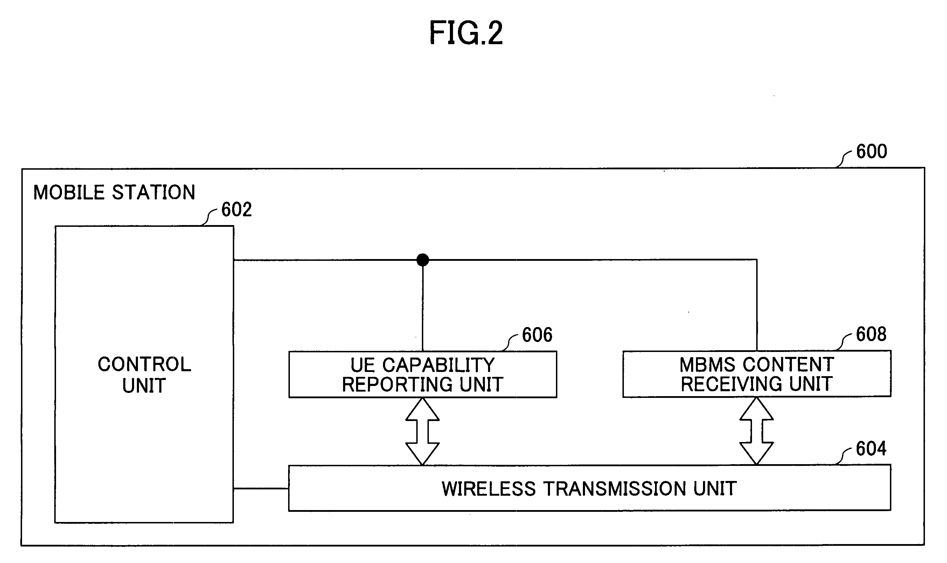

Next, the mobile station 600 of this embodiment is described with reference to FIG. 2.

The mobile station 600 of this embodiment includes a control unit 602, a wireless transmission unit 604 used as a transmission unit and connected to the control unit 602, an MBMS content receiving unit 608, and a UE capability reporting unit 606 used as a mobile station capability reporting unit. The wireless transmission unit 604 can output and input data to and from the UE capability reporting unit 606 and the MBMS content receiving unit 608.

The control unit 602 appropriately controls other functional entities of the mobile station 600. For example, the control unit 602 determines whether content delivery is being announced by a content provider to which the mobile station 600 subscribes.

The wireless transmission unit 604 sends and receives signaling messages, e.g., non-access stratum (NAS)/MBMS contents, over a radio link with the access gateway 400.

The UE capability reporting unit 606 reports at least information indicating the frequency band supported by the mobile station 600 via the base station 500 to the access gateway 400. For example, the UE capability reporting unit 606 includes information indicating the frequency bandwidth supported by the mobile station 600 in a Join request and sends the Join request to the access gateway 400. Alternatively, the UE capability reporting unit 606 may be configured to report at least information indicating the maximum transmission rate that is equivalent to the frequency band supported by the mobile station 600 via the base station 500 to the access gateway 400.

The information to be reported by the UE capability reporting unit 606 is not limited to the frequency band supported by the mobile station 600. For example, the information may include the number of MIMO antennas supported, TTI, a guard interval (GI) in OFDM, an encryption algorithm, and a layer 2 configuration such as outer ARQ or HARQ.

The MBMS content receiving unit 608 receives MBMS contents via the wireless transmission unit 604.

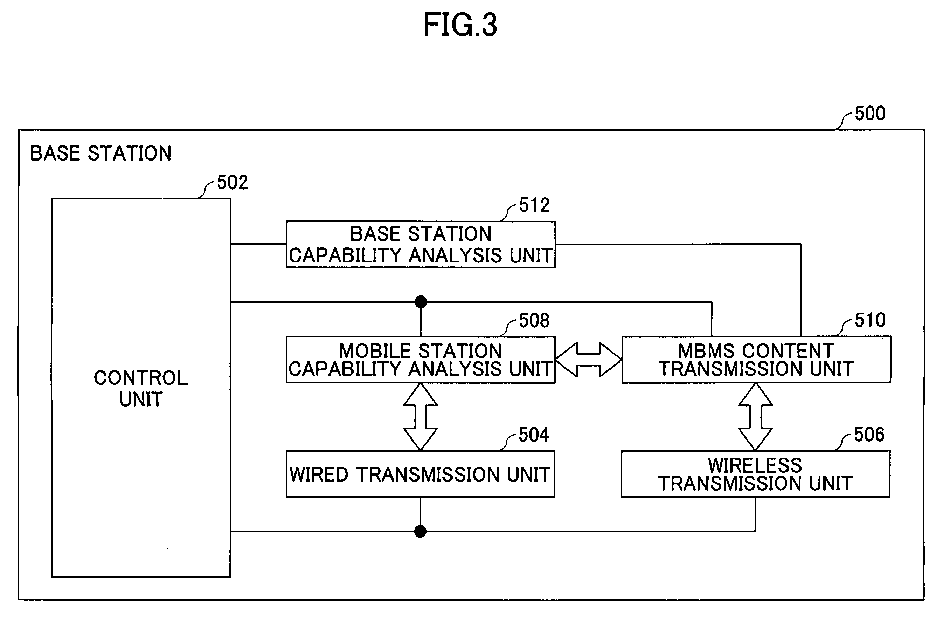

Next, the base station 500 of this embodiment is described with reference to FIG. 3.

The base station 500 of this embodiment includes a control unit 502, a wired transmission unit 504 connected to the control unit 502, a mobile station capability analysis unit 508 used as a grouping unit, an MBMS content transmission unit 510 used as a content transmission unit, a wireless transmission unit 506, and a base station capability analysis unit 512.

The mobile station capability analysis unit 508 can output and input data to and from the wired transmission unit 504 and the MBMS content transmission unit 510. The MBMS content transmission unit 510 can output and input data to and from the wireless transmission unit 506.

The control unit 502 appropriately controls other functional entities of the base station 500. The control unit 502 determines whether information indicating capabilities of mobile stations (e.g., information indicating frequency bands supported by the mobile stations) that are in the coverage area of the base station 500 and in a multicast group has been sent from the access gateway 400.

The wireless transmission unit 506 sends signaling messages and receives MBMS contents over a radio link with the mobile stations 600.

The mobile station capability analysis unit 508 groups mobile stations that are in the coverage area of the base station 600 and have requested to join the multicast group, and identifies capabilities, such as supported frequency bands, of the mobile stations in each group. For example, the mobile station capability analysis unit 508 groups the mobile stations based on their identification information, and identifies frequency bands supported by the mobile stations in each group.

Alternatively, the mobile station capability analysis unit 508 may be configured to group the mobile stations based on information received from the access gateway 400 via the wired transmission unit 504 and indicating frequency bands supported by the mobile stations.

Also, the mobile station capability analysis unit 508 may be configured to group the mobile stations based on information received from the access gateway 400 via the wired transmission unit 504 and indicating maximum transmission rates that are equivalent to frequency bands supported by the mobile stations.

The mobile station capability analysis unit 508 identifies capabilities, such as supported frequency bands, of the mobile stations in the multicast group, and inputs information indicating the minimum capability, such as the lowest value of the supported frequency bands, of the mobile stations to the MBMS content transmission unit 510.

The base station capability analysis unit 512 analyzes an operating condition, such as an allocated frequency band, of the base station 500 and inputs information indicating the operating condition of the base station 500 to the MBMS content transmission unit 510.

The MBMS content transmission unit 510 compares the minimum capability of the mobile stations in the multicast group and the operating condition of the base station, thereby determines the transmission rate of MBMS content, and sends the MBMS content received from an upper node to the multicast group. For example, the MBMS content transmission unit 510 compares the minimum capability, such as the lowest value of supported frequency bandwidths, of the mobile stations and the frequency bandwidth available for the base station, and determines the transmission frequency bandwidth for the MBMS content.

Then, the MBMS content transmission unit 510 sends the MBMS content received from an upper node, such as the access gateway 400, to the mobile stations belonging to the multicast group. As a result, the MBMS content is sent via the wireless transmission unit 506 to the mobile stations 600.

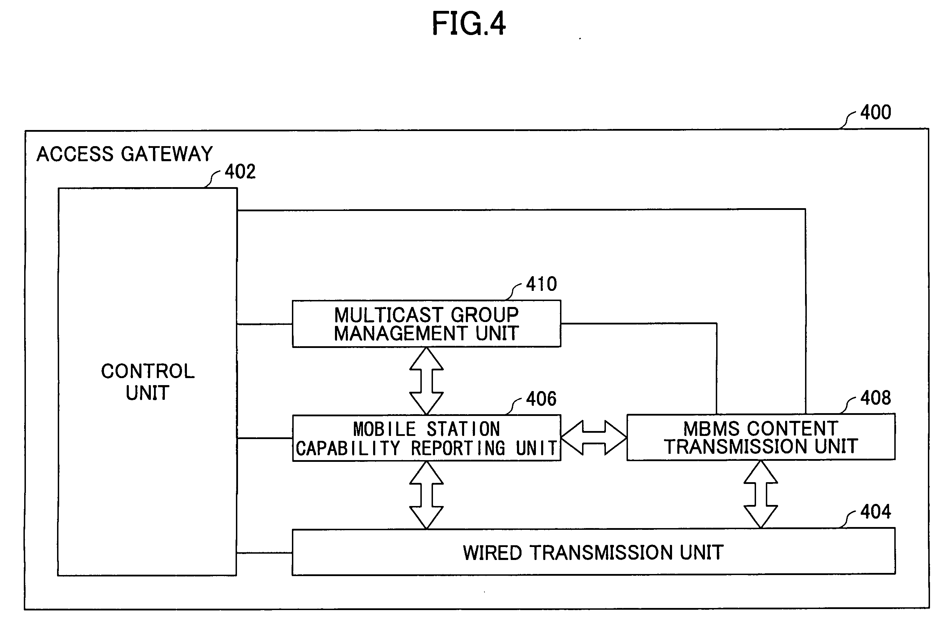

Next, the access gateway 400 of this embodiment is described with reference to FIG. 4.

The access gateway 400 of this embodiment includes a control unit 402, a wired transmission unit 404 connected to the control unit 402, a mobile station capability reporting unit 406, an MBMS content transmission unit 408, and a multicast group management unit 410.

The mobile station capability reporting unit 406 can output and input data to and from the wired transmission unit 404, the multicast group management unit 410, and the MBMS content transmission unit 408 used as a content transmission unit. The MBMS content transmission unit 408 can output and input data to and from the wired transmission unit 404.

The control unit 402 appropriately controls other functional entities of the access gateway 400. For example, when a Join request for a multicast service is received from the mobile station 600, the control unit 402 extracts a UE capability, such as an MBMS bearer capability, from the Join request message and sends the extracted UE capability to the multicast group management unit 410. More specifically, for example, the control unit 402 extracts information indicating at least the supported frequency band of the mobile station that has sent the Join request or the transmission rate equivalent to the frequency band, and sends the extracted information to the multicast group management unit 410.

The wired transmission unit 404 receives signaling messages from and sends MBMS contents to the base stations 500.

The mobile station capability reporting unit 406 reports information indicating capabilities, such as supported frequency bands, of mobile stations in a multicast group to the base stations 500 by using, for example, signaling messages. Alternatively, the mobile station capability reporting unit 406 may be configured to report information indicating transmission rates that are equivalent to the supported frequency bands of the mobile stations.

The multicast group management unit 410 accepts Join requests to join multicast groups from the mobile stations 600. The multicast group management unit 410 also manages mobile stations in the respective multicast groups. For example, the multicast group management unit 410 stores and manages information indicating at least either frequency bands supported by the mobile stations that have sent the Join requests or transmission rates equivalent to the supported frequency bands.

The MBMS content transmission unit 408 sends MBMS contents to the mobile stations in the respective multicast groups managed by the multicast group management unit 410.

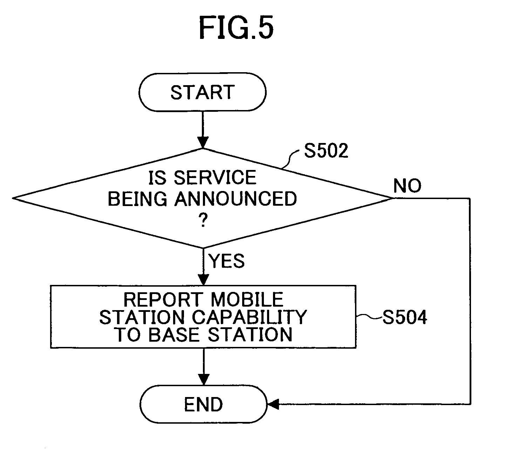

Next, operations of a wireless communication system of this embodiment are described with reference to FIGs. 5 through 7.

Below, operations of the mobile station 600, the base station 500, and the access gateway 400 are described separately.

First, exemplary operations of the mobile station 600 are described with reference to FIG. 5.

The mobile station 600 subscribes to content providers in advance.

The control unit 602 determines whether content delivery is being announced by a content provider to which the mobile station 600 subscribes (step S502).

If the content delivery is not being announced (NO in step S502) or the user is not interested in the content being announced, the control unit 602 does not request the delivery of the content and terminates the process.

If the content delivery is being announced (YES in step S502) and the user has requested the delivery of the content, the UE capability reporting unit 606 reports a UE capability (mobile station capability), such as the supported frequency bandwidth, of the mobile station via the base station 500 to the access gateway 400 by using a signaling message (step S504). As a result, the information indicating the supported frequency band of the mobile station is sent via the base station 500 to the access gateway 400.

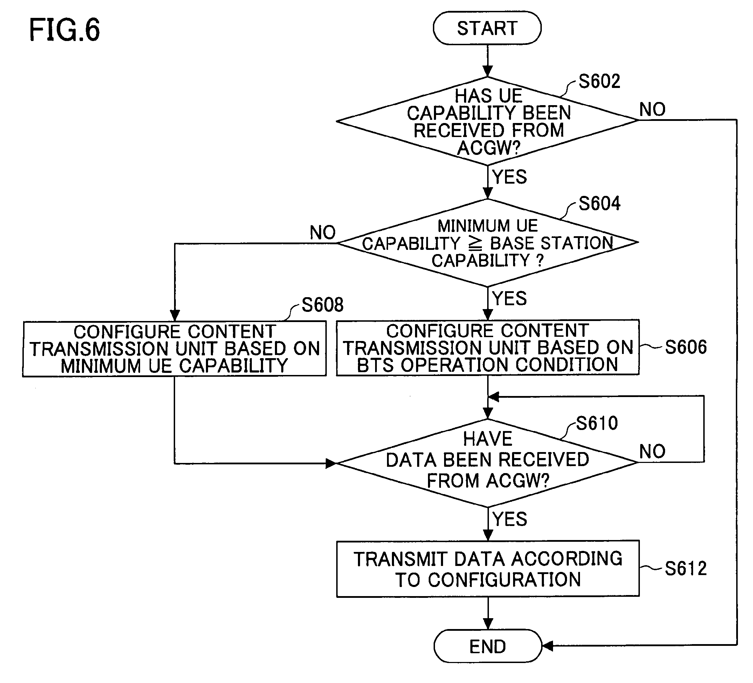

Next, operations of the base station 500 are described with reference to FIG. 6.

The control unit 502 determines whether information indicating capabilities of mobile stations (e.g., information indicating frequency bands supported by the mobile stations) that are in the coverage area of the base station and in a multicast group has been received from the access gateway 400 (step S602).

If the information indicating the capabilities of the mobile stations has not been received from the access gateway 400 (NO in step S602), the control unit 502 terminates the process.

If the information indicating the capabilities of the mobile stations has been received from the access gateway 400 (YES in step S602), the mobile station capability analysis unit 508 determines the minimum UE capability in the capabilities of the mobile stations belonging to the multicast group, and inputs the minimum UE capability to the MBMS content transmission unit 510. The base station capability analysis unit 512 also inputs information indicating the operating condition, such as an available frequency band, of the base station 500 to the MBMS content transmission unit 510.

The MBMS content transmission unit 510 compares the minimum UE capability and the available frequency band of the base station 500 (step S604).

If the minimum UE capability is greater than the available frequency band of the base station 500 (YES in step S604), the MBMS content transmission unit 510 sets up its configuration based on the available frequency band of the base station 500 (step S606).

If the minimum UE capability is equal to or less than the available frequency band of the base station 500 (NO in step S604), the MBMS content transmission unit 510 sets up its configuration based on the minimum UE capability (step S608).

Then, the MBMS content transmission unit 510 determines whether transfer of the MBMS content has been started by the access gateway 400 based on, for example, whether a session start procedure has been executed (step S610).

If the transfer of the MBMS data has not been started (NO in step S610), step S610 is repeated.

If the transfer of the MBMS data has been started (YES in step S610), the MBMS content transmission unit 510 performs scheduling and transmits the data according the configuration set in step S606 or S608 (step S612).

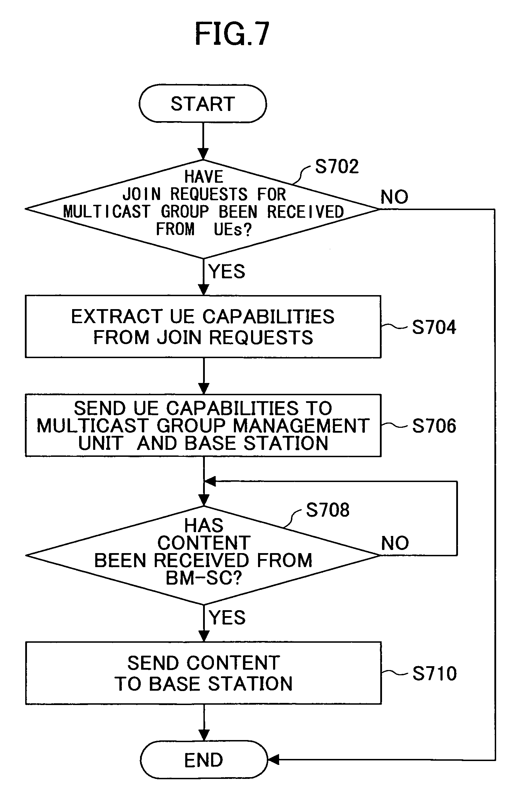

Next, exemplary operations of the access gateway 400 are described with reference to FIG. 7.

The control unit 402 of the access gateway 400 determines whether Join requests for an MBMS service have been received from the mobile stations 600 (step S702).

If no Join request has been received from the mobile stations 600 (NO in step S702), the control unit 402 terminates the process.

If Join requests for the MBMS service have been received from the mobile stations 600 (YES in step S702), the control unit 402 extracts UE capabilities, such as MBMS bearer capabilities, from the Join request messages (step S704).

Next, the control unit 402 sends the UE capabilities extracted in step S704 to the multicast group management unit 410.

Meanwhile, the mobile station capability reporting unit 406 sends the UE capabilities extracted in step S704 via the wired transmission unit 404 to the base station 500 (step S706).

Then, the MBMS content transmission unit 408 determines whether the MBMS content has been received from the MBMS delivery server (BM-SC) (step S708).

If the MBMS content has not been received from the MBMS delivery server 300 (NO in step S708), step S708 is repeated.

If the MBMS content has been received from the MBMS delivery server 300 (YES in step S708), the MBMS content transmission unit 408 refers to the multicast group management unit 410 and transfers the MBMS content to the corresponding multicast group (step S710).

Next, a wireless communication system according to another embodiment of the present invention is described.

The configuration of the wireless communication system of this embodiment is substantially the same as that of the wireless communication system described in the above embodiment except that configurations of the base stations 500 and the mobile stations 600 are different.

The wireless communication system of this embodiment is described below with reference to FIG. 1. The base stations A500₁ and B500₂ support up to the 20 MHz frequency band. Table 2 shows frequency bands supported by the respective mobile stations.

**[Table 2]**

| | 5 MHz | 10 MHz | 15 MHz | 20 MHz |
|---|---|---|---|---|
| Mobile station A | ○ | ○ | ○ | ○ |
| Mobile station B | ○ | ○ | ○ | ○ |
| Mobile station C | ○ | ○ | ○ | |
| Mobile station D | ○ | ○ | ○ | ○ |
| Mobile station E | ○ | ○ | ○ | ○ |
| Mobile station F | ○ | | | |

The mobile station A600₁ supports the 20 MHz frequency band, the mobile station B600₂ supports the 20 MHz frequency band, the mobile station C600₃ supports the 10 MHz frequency band, the mobile station D600₄ supports the 20 MHz frequency band, the mobile station E600₅ supports the 20 MHz frequency band, and the mobile station F600₆ supports the 5 MHz frequency band.

The mobile stations 500 belonging to the base stations A500₁ and B500₂ send Join requests. The base stations A500₁ and B500₂ respond in different manners according to the Join requests.

Take, for example, a case where the mobile station C600₃ tries to join a multicast group after the mobile stations A600₁ and B600₂ belonging to the base station A500₁ start a session. In this case, the mobile stations A600₁ and B600₂ have already joined the multicast group.

When the mobile station C600₃ detects an announcement of a multicast service it subscribes to, the mobile station C600₃ sends a Join request to join the multicast group to the access gateway 400.

The access gateway 400 extracts the UE capability from the Join request of the mobile station C600₃ and accepts the request to join the multicast group.

The access gateway 400 may be configured to report the UE capability of the mobile station C600₃ to the base station A500₁. The base station A500₁, however, does not accept the Join request during data transfer. Instead, the base station A500₁ changes the configuration according to the capability of the mobile station C600₃ after the data transfer is completed, and reconfigure the MBMS radio access bearer, i.e., radio parameters, according to the change. After the reconfiguration of the MBMS radio access bearer, the base station A500₁ schedules MBMS contents to be transmitted thereafter to the mobile stations A600₁, B600₂, and C600₃.

Take, for example, another case where the mobile station F600₆ tries to join a multicast group after the mobile stations D600₄ and E600₅ belonging to the base station B500₂ start a session. In this case, the mobile stations D600₄ and E600₅ have already joined the multicast group.

When the mobile station F600₆ detects an announcement of a multicast service it subscribes to, the mobile station F600₆ sends a Join request to join the multicast group to the access gateway 400.

The access gateway 400 rejects the Join request from the mobile station F600₆. Alternatively, the access gateway 400 may be configured to accept the Join request if the request is received after a previous session is terminated and before the next session is started. In this case, the base station B500₂ adds the mobile station F600₆ to the multicast group and reconfigures the MBMS radio access bearer, i.e., the radio parameters.

Functional configurations of the mobile stations, the base stations, and the access gateway of this embodiment are substantially the same as those described with reference to FIGs. 2 through 4, and therefore their descriptions are omitted here.

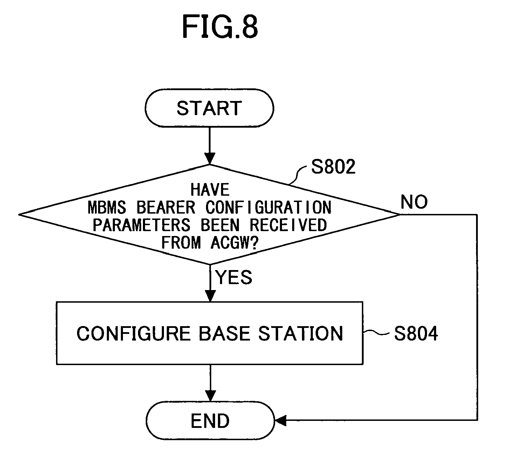

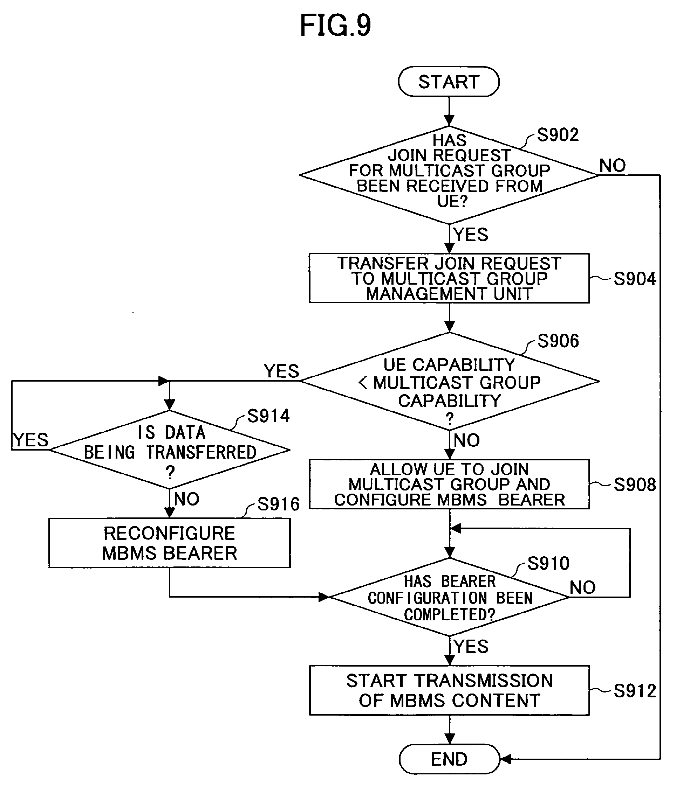

Next, operations of a wireless communication system of this embodiment are described with reference to FIGs. 8 and 9.

Below, operations of the base station 500 and the access gateway 400 are described separately. The operations of the mobile station 500 are substantially the same as those described in the above embodiments.

First, exemplary operations of the base station 500 are described with reference to FIG. 8.

The control unit 502 of the base station 500 determines whether configuration/reconfiguration parameters of the MBMS bearer are received from the access gateway 400 (step S802).

If the configuration/reconfiguration parameters of the MBMS bearer have not been received from the access gateway 400 (NO in step S802), the control unit 502 terminates the process.

If the configuration/reconfiguration parameters of the MBMS bearer have been received from the access gateway 400 (YES in step S802), the MBMS content transmission unit 510 sets the received configuration/reconfiguration parameters and sends the MBMS content transferred from the access gateway 400 (step S804). For example, the MBMS content transmission unit 510 compares the minimum UE capability and the available frequency band of the base station 500 input from the base station capability analysis unit 512, and sets up the configuration according to the comparison result.

Next, exemplary operations of the access gateway 400 are described with reference to FIG. 9.

The control unit 402 of the access gateway 400 determines whether a Join request to join a multicast group is received from the mobile station 600 (step S902).

If no Join request for the multicast group has been received from the mobile station 600 (NO in step S902), the control unit 402 terminates the process.

If a Join request for the multicast group has been received from the mobile station 600 (YES in step S902), the control unit 402 transfers the Join request to the multicast group management unit 410 (step S904).

The multicast group management unit 410 refers to the UE capability in the Join request of the mobile station and determines whether the UE capability is less than the UE capabilities of other mobile stations in the multicast group (step S906).

If the UE capability is not less than the UE capabilities of other mobile stations in the multicast group (NO in step S906), the multicast group management unit 410 allows the mobile station to join the multicast group (step S908). The MBMS content transmission unit 408 configures the MBMS bearer separately for each UE (step S908).

Then, the MBMS content transmission unit 408 determines whether the configuration of the MBMS bearer has been completed (step S910).

If the configuration of the MBMS bearer has been completed (YES in step S910), the MBMS content transmission unit 408 starts transfer of the MBMS content (step S912).

If the configuration of the MBMS bearer has not been completed (NO in step S910), step S910 is repeated.

If the UE capability of the mobile station is less than the UE capabilities of other mobile stations in the multicast group (YES in step S906), the control unit 402 determines whether a session has been started and data are being transferred (step S914).

If a session has been started and data are being transferred (YES in step S914), step S914 is repeated.

If no session is in progress (NO in step S914), the MBMS content transmission unit 408 reconfigures the MBMS bearer of the multicast group to reflect the capability of the mobile station that has joined the multicast group (step S916).

In the above embodiments, it is assumed that each base station serves one cell. However, in a typical wireless communication system, each base station serves multiple cells. The above embodiments may also be applied to a wireless communication system where each base station serves multiple cells by interpreting base stations in the above descriptions as cells.

According to embodiments of the present invention, a base station identifies frequency bands supported by mobile stations and a frequency band available for the base station, and assigns MBMS data to a frequency band commonly supported by the mobile stations that are to receive the MBMS data. This configuration makes it possible to efficiently transmit MBMS data in a system where frequency bands are flexibly allocated.

Also, in an SAE/LTE system, embodiments of the present invention make it possible to equally transmit MBMS data to mobile stations belonging to a group for receiving the MBMS data and having different capabilities.

The present international application claims priority from Japanese Patent Application No. 2006-089423 filed on March 28, 2006, the entire contents of which are hereby incorporated herein by reference.

### INDUSTRIAL APPLICABILITY

A central node, a base station, a mobile station, and a data transmission method according to embodiments of the present invention may be applied to a wireless communication system.

## Claims

1. A central node, comprising:
a content transmission unit configured to, when a request to join a multicast group is received from a mobile station, compare at least supported frequency bands or transmission rates of mobile stations already in the multicast group with a supported frequency band or a transmission rate, respectively, of the mobile station that has sent the request, to configure a radio parameter based on the comparison result, and to transmit a content.

2. The central node as claimed in claim 1, wherein the content transmission unit is configured to configure the radio parameter after current transmission of a content is completed if at least the supported frequency band or the transmission rate of the mobile station that has sent the request to join the multicast group is less than the supported frequency bands or the transmission rates, respectively, of the mobile stations already in the multicast group.

3. The central node as claimed in claim 1, wherein the content transmission unit is configured, if the request to join the multicast group is received after a session is started and while multicast data are being transmitted, to reconfigure the radio parameter after the transmission of the multicast data is completed.

4. The central node as claimed in claim 1, wherein the content transmission unit is configured, if the request to join the multicast group is received after a session is started, to reconfigure the radio parameter after the session is completed.

5. A base station, comprising:
a grouping unit configured to categorize mobile stations that are in the coverage area of the base station and in a multicast group into groups; and
a content transmission unit configured to determine radio parameters for a content based on at least supported frequency bands or transmission rates of the mobile stations in the respective groups and an available frequency band or a transmission rate, respectively, of the base station and to transmit the content received from an upper node to the multicast group.

6. The base station as claimed in claim 5, wherein the grouping unit is configured to categorize the mobile stations into groups based on identification information of the mobile stations.

7. The base station as claimed in claim 5, wherein the grouping unit is configured to categorize the mobile stations into groups based on the supported frequency bands of the mobile stations.

8. The base station as claimed in claim 5, wherein the content transmission unit is configured, if the available frequency band or the transmission rate of the base station is less than the supported frequency bands or the transmission rates, respectively, of the mobile stations in the respective groups, to transmit the content received from the upper node to the multicast group by using the available frequency band or the transmission rate of the base station.

9. A mobile station, comprising:
a mobile station capability reporting unit configured to generate a request to join a multicast group which request includes information indicating at least a supported frequency band or a transmission rate; and
a transmission unit configured to transmit the request.

10. A data transmission method, comprising:
a grouping step of categorizing mobile stations that are in the coverage area of a base station and in a multicast group into groups;
a transmission capability determining step of determining radio parameters for a content based on at least supported frequency bands or transmission rates of the mobile stations in the respective groups and an available frequency band or a transmission rate, respectively, of the base station; and
a content transmission step of transmitting the content received from an upper node to the multicast group.
